# EUROPEAN PATENT SPECIFICATION

(11) **EP 4 250 952 B1**
(45) Date of publication and mention of the grant of the patent: **22.10.2025**
(21) Application number: 21824217.0
(22) Date of filing: 17.11.2021
(51) Int. Cl.: A23J 3/22, A23J 3/14, A23L 13/60, C11C 3/10

(54) **MEAT SUBSTITUTE PRODUCT**
FLEISCHERSATZPRODUKT
PRODUIT DE SUBSTITUTION DE LA VIANDE

(30) Priority: 24.11.2020 EP 20209359
(43) Date of publication of application: 04.10.2023
(73) Proprietor: Cargill, Incorporated, Wayzata, Minnesota 55391 (US)
(72) Inventor: FELKE, Beatrice Ines, 20099 Hamburg (DE); VAN BEVEREN, Zuzana, 2811 Hombeck (BE)
(74) Representative: Elseviers, Myriam
(86) International application number: PCT/US2021/059680
(87) International publication number: WO 2022/115289

(56) References cited:
- WO-A1-2021/098966
- US-A- 3 840 679
- US-A1- 2015 208 686
- US-A1- 2019 008 192
- US-A1- 2020 037 629
- US-B1- 6 238 926
- VURAL H: "Effect of replacing beef fat and tail fat with interesterified plant oil on quality characteristics of Turkish semi-dry fermented sausages", EUROPEAN FOOD RESEARCH AND TECHNOLOGY, SPRINGER BERLIN HEIDELBERG, BERLIN/HEIDELBERG, vol. 217, 22 May 2003 (2003-05-22), pages 100 - 103, XP002316431, ISSN: 1438-2377, DOI: 10.1007/S00217-003-0727-Y
- OZVURAL ET AL: "Utilization of interesterified oil blends in the production of frankfurters", MEAT SCIENCE, ELSEVIER SCIENCE, GB, vol. 78, no. 3, 24 November 2007 (2007-11-24), pages 211 - 216, XP022361013, ISSN: 0309-1740
- "SYNTHETIC MEAT GRANULES", RESEARCH DISCLOSURE, KENNETH MASON PUBLICATIONS, HAMPSHIRE, UK, GB, no. 207, 1 July 1981 (1981-07-01), pages 260/261, XP002034830, ISSN: 0374-4353

## Description

### CROSS-REFERENCE TO RELATED APPLICATIONS

### FIELD OF THE INVENTION

The present invention relates to a meat substitute product comprising a randomly interesterified triglyceride and at least one protein ingredient. Preferably the meat substitute product is an emulsified meat substitute product that is consumed as cold cut.

### BACKGROUND OF THE INVENTION

Traditionally, meat products have taken an important place in our western diet. Meat products are consumed in many different forms as whole muscle or minced pieces of meat that are cooked, grilled, smoked, cured or fermented in form of hamburgers, patties, sausages, meat balls, nuggets and many more.

There is a growing consumer trend for reducing or completely removing these animal products from their diet. Consumers switch towards plant-based meat substitutes because of various reasons such as health concerns, environmental concerns, sustainability or animal welfare.

In order for a regular meat consumer to be motivated to choose for meat substitutes, it is critical that these substitutes mimic processed meat products in terms of texture, organoleptic properties, like appearance, flavor, bite, succulence, and mouthfeel, and overall acceptance.

Various functional ingredients in meat substitutes are required to mimic the taste, flavor, texture, mouthfeel and appearance of meat-based products.

US 3,840,679 describes a process for a process for preparing a meat analog which comprising the steps of forming a dry protein mix which comprises from 30% to 100% by weight of edible protein; adjusting the moisture content of the dry mix to form a dough-like protein wet mix; creping the protein wet mix to form a coherent workable creped protein dough sheet; aggregating the creped sheet by collecting the sheet into a mass; and stabilizing the aggregate by heating to form a coherent fiber mass resembling meat in appearance, texture, and eating, quality.

There is still a need to improve the texture and/or organoleptic properties of meat substitutes and more specifically of emulsified meat alternatives. The present invention provides such a solution.

### SUMMARY OF THE INVENTION

The present invention relates to a meat substitute product as set out in the claims.

### DETAILED DESCRIPTION

The present invention relates to a meat substitute product as set out in the claims comprising a randomly interesterified triglyceride, and at least one protein ingredient, wherein the randomly interesterified triglyceride has a content of lauric acid (C12) of less than 5.0 wt%, a content of palmitic acid (C16) and stearic acid (C18) in a range of from 35 to 65%, and a ratio of C18 over C16 in a range of from 1.0 to 10.0.

Meat substitute product are food or feed compositions that mimic animal processed whole-muscle meat products as well as processed restructured meat products such as burgers, patties, sausages and the like. Methods of processing may be salting, curing, chopping, fermentation, boiling, smoking, extrusion or other processes.

Meat substitute products can be divided into coarse-particle products and a fine paste products. Examples of coarse-particle products are alternatives for burgers, patties, sausages, meatballs, chicken nuggets and the like. Fine paste products are typically emulsified products such as alternatives for frankfurter, bologna, mortadella and the like.

In one aspect of the invention, the meat substitute product is an emulsified meat substitute product. Emulsified meat substitute product requires processing of the food or feed ingredients into an emulsion, followed by shaping and heating to solidify the product into a stable physical form. The continuous phase of the emulsified meat substitute product is mainly composed of water, proteins and further ingredients such as texturing ingredients, coloring agents, spices, and the like. The dispersed phase of the emulsified meat alternative is fat and/or oil. Preferably the emulsified meat substitute product is an emulsified vegetarian protein product. The emulsified vegetarian protein product is not based on meat or fish. More preferably the emulsified meat substitute product is an emulsified vegan protein product. The emulsified vegan protein product is not based on products derived from animals. Examples of products derived from animals are amongst others meat, fish, eggs, milk or honey

The meat substitute product of the present invention is typically designed for consumption after cooking.

In another aspect of the invention, the meat substitute product is a cold cut. The term "cold cut", also known as "luncheon meat", "sandwich meat", "sliced meat" or "deli meat" refers to heat treated or cured meat or meat alternative. It is often sliced or diced, and served cold, such as on sandwiches or on party trays.
In a preferred aspect the term "cold cut" is a sausage. It is sliced, served and consumed cold. Sausages typically comprise cylindrical containers, designated as casings, which are used to contain sausage mixes. Although the term "sausage" generally relates to a food product having an approximately cylindrical shape, corresponding products having a non-cylindrical shape are also encompassed herein by the term "sausage". Vegetarian sausages (including cold cuts) are encompassed by the term "sausage".

Alternatively, the meat substitute product of the present invention is a pet food. The term "pet food" means any food composition intended to be consumed by a pet. A pet may be any domestic or tamed animal kept for companionship or pleasure. For example, the pet can be an avian, bovine, canine, equine, feline, hircine, lupine, murine, ovine, or porcine animal. Preferably, the pet is a dog or a cat.

The meat substitute product of the present invention is comprising a randomly interesterified triglyceride, which is a triglyceride composition wherein the fatty acids are randomly distributed over the glycerol backbone of the triglycerides.

The randomly interesterified triglyceride can be obtained by means of a process of chemical or enzymatic interesterification.

A chemical interesterification is performed by using an acidic or basic catalyst, preferably a basic catalyst, such as, but not limited to, sodium methoxide or sodium ethoxide.

An enzymatic interesterification is obtained by means of a lipase enzyme. The lipase will generally be non-selective for the positions on the glyceride backbone in order to achieve the optimum random interesterification. Alternatively, selective lipases may be used, provided that the reaction conditions are such that no significant selectivity is observed, for example by running the reaction for extended periods of time. Suitable lipases include the lipases from *Thermomyces lanuginosa, Rhizomucor miehei, Rhizopus delemar* and *Candida rugosa.* Preferably, the lipase is suitable for use with food products.

It may be that the interesterification is not fully random, but it is preferably random to a large extent, for example greater than 75 %, greater than 85 %, preferably greater than 95 % of the fatty acid residues may change position during the reaction i.e. less than 25 %, less than 15 %, preferably less than 5 % of the fatty acids retain their original position of the starting triglyceride.

The interesterified triglyceride may be characterized by the position of the saturated (S) and/or unsaturated (U) fatty acids bound onto the glycerol backbone of the triglyceride.

Typically, the abbreviation S is used to denote a saturated fatty acid residue having 12 to 24 carbon atoms. The abbreviation U denotes an unsaturated fatty acid residue having 12 to 24 carbon atoms. Thus, a triglyceride having saturated fatty acids at the 1- and 3-positions and an unsaturated fatty acid at the 2- position of the glycerol backbone is denoted SUS. Likewise, a triglyceride having 2 saturated fatty acids at the 1- or 3- position and at the 2- position of the glycerol backbone and an unsaturated fatty acid at the remaining 1- or 3- position is denoted SSU.

The ratio of SUS over SSU (SUS/SSU) of a fully randomized triglyceride composition is 0.5, whereas the SUS/SSU ratio of a non-randomized triglyceride is significantly higher than 1.

The triglyceride composition of the randomized triglyceride is characterized by a ratio of SUS over SSU (SUS/SSU) in a range of from 0.5 to 1.0, from 0.6 to 0.9, or from 0.7 to 0.8.

In another aspect of the invention, the randomly interesterified triglyceride is obtained by means of a chemical interesterification.

The randomly interesterified triglyceride has a content of palmitic acid (C16) and stearic acid (C18) in a range of from 35 to 65 wt%, from 38 to 55 wt%, from 40 to 50 wt%, or from 42 to 45 wt%. The ratio of C18 over C16 is in a range of from 1.0 to 10.0, from 1.1 to 8.0, or from 1.2 to 6.5. The content of lauric acid (C12) in the randomly interesterified triglyceride is less than 5.0 wt%, less than 3.0 wt%, or even less than 1.0 wt%.

The saturated fatty acids of the randomly interesterified triglyceride are sourced from non-lauric triglycerides such as, but not limited to palm oil, cocoa butter, shea butter, shea stearin, shea olein, liquid oils such as sunflower oil, rapeseed oil, cottonseed oil or soybean oil, or any combination of two or more thereof. The triglycerides may be hydrogenated and/or fractionated. Palm oil is encompassing palm oil, as well as palm oil fractions such as stearin and olein fractions (single as well as double fractionated), palm mid fractions and blends of palm oil and/or its fractions.

Preferably the fatty acids of the randomly interesterified triglyceride are not sourced from palm. Example of fatty acids sourced from palm are palm oil, palm oil fractions, palm kernel oil, palm kernel oil fractions or any combination of two or more thereof.

Preferably the fatty acids of the randomly interesterified triglyceride are not sourced from hydrogenated triglycerides.

The randomly interesterified triglyceride has a content of oleic acid (C18.1) and linoleic acid (C18.2) in a range of from 35 to 60 wt%, from 40 to 58 wt%, or from 45 to 55 wt%.

In yet another aspect of the invention, the randomly interesterified triglyceride has a melting point in a range of from 35 to 65°C, from 38 to 55°C, or from 40 to 50°C. The melting point can be determined according to the official AOCS method Cc 3- 25.

In a preferred aspect of the invention, the randomly interesterified triglyceride has:
- a content of C16+C18 in a range of from 35 to 65 wt%, from 38 to 50 wt%, from 40 to 45 wt%, and
- a ratio of C18 to C16 of from 1.0 to 1.5, from 1.1 to 1.4, and
- a content of C12 of less than 5.0 wt%, less than 3.0 wt%, or even less than 1.0 wt%, and
- a content of C18.1+C18.2 in a range of from 35 to 60 wt%, from 40 to 58 wt%, or from 45 to 55 wt%,
- an SUS/SSU ratio in a range of from 0.5 to 1.0, from 0.6 to 0.9, or from 0.7 to 0.8, and wherein the fatty acids from the randomly interesterified triglyceride are not sourced from palm and/or hydrogenated triglycerides.

The randomly interesterified fat is present in the meat substitute product in an amount of from 1.0 to 10.0 wt%, from 1.5 to 8.0 wt%, from 2.0 to 6.0 wt%, or from 3.0 to 5.0 wt% on the total weight of the meat substitute product.

The meat substitute product has a total triglyceride content in a range of from 5 to 40 wt%, from 6.5 to 33 wt%, from 9 to 26 wt%, or from 13 to 20 wt% on the total weight of the meat substitute product. The total triglyceride content of the meat substitute product is comprising the randomly interesterified triglyceride.

The total fat content of the meat substitute product may further comprise other triglycerides such as, but not limited to, palm oil and palm oil fractions such as palm oil stearin or palm oil olein, cocoa butter, shea butter, shea stearin, shea olein, liquid oils such as sunflower oil, rapeseed oil, cottonseed oil or soybean oil, hydrogenated liquid oils, or any combination of two or more thereof.

In one aspect of the invention, the meat substitute product is further comprising a liquid oil in a range of from 4 to 30 wt%, from 5 to 25 wt%, from 7 to 20 wt%, from 10 to 15 wt% on the total weight of the meat substitute product.

The term "liquid oil" is defined as triglycerides with a melting point of less than 20°C. The liquid oil can be one liquid oil or a blend of more than one liquid oils. In case of a blend of liquid oils, it is understood that the blend of the more than one liquid oil has a melting point of less than 20°C.

The "liquid oil" is a vegetable oil.

Examples of vegetable liquid oils are amongst others double fractionated palm olein, cottonseed oil, corn oil, groundnut oil, linseed oil, olive oil, rapeseed oil, rice bran oil, sesame oil, safflower oil, soybean oil, sunflower oil, oil from any variety of oilseeds with increased level of unsaturated fatty acids compared to the original seed variety, such as mid or high oleic sunflower oil. These varieties with increased levels of unsaturated fatty acids can be obtained by natural selection or by genetic modification (GMO). Preferably, the vegetable oil is selected from the group consisting of cottonseed oil, corn oil, groundnut oil, linseed oil, olive oil, rapeseed oil, rice bran oil, sesame oil, safflower oil, soybean oil, sunflower oil, their corresponding high oleic varieties, and mixture of two or more thereof. More preferably, the vegetable oil is selected from the group consisting of corn oil, rapeseed oil, soybean oil, sunflower oil, their corresponding high oleic varieties, and mixture of two or more thereof. The high oleic varieties are containing at least 40%, at least 50%, at least 60%, at least 70% and preferably at least 80% oleic acid in respect of the fatty acid profile.

In a preferred aspect of the invention, the meat substitute product comprises substantially no oils sourced from palm. Certain consumers prefer food and/or feed products without oils sourced from palm, such as palm oil, palm oil fractions, palm kernel oil, palm kernel oil fractions or a combination of two or more thereof. Therefore, the meat substitute product according to the present invention can offer an alternative to products based on or containing oils sourced from palm.

In another preferred aspect of the invention, the meat substitute product comprises substantially no hydrogenated triglycerides.

The meat substitute product also comprises at least one protein ingredient. The at least one protein ingredient may be from plants, fungi, algae, insects, animals, cultured meat or a mixture of two or more thereof. Examples of animal protein ingredients are comminuted meats, or other products derived from animals, such as, but not limited to eggs, dairy products such as whey or casein, or combinations of two or more thereof. Examples of plant proteins are amongst others soy, wheat, legume proteins, e.g. pea or chickpea, lupine, rice, canola, or mixtures of two or more thereof. Cultured meat, also called cell grown meat, are products obtained without raising and processing animals. Cultured meat is obtained from cells sourced from animal muscle and tissue that are cultured in a laboratory
Preferably the at least one protein ingredient is sourced from plants, fungi, algae, or a mixture of two or more thereof.

In one aspect of the invention, the at least one protein ingredient is present in a range of from 2 to 25 wt%, from 5 to 20 wt%, or from 10 to 15 wt% on the total weight of meat substitute product.

In another aspect of the invention, the meat substitute product further comprises water. The amount of water is in a range of from 40 to 80 wt%, 50 to 75 wt%, or from 60 to 70wt% on the total weight of meat substitute product. The amount of water, as used herein, refers to the added amount of water, excluding the amount that is present in the protein source.

Depending on the traditions and legal provisions of the respective countries, the filling of the food product of the present invention may also comprise one or more dry ingredients selected from sodium chloride, sodium phosphates, sodium ascorbates, caseinates, citrates, sodium carbonates, one or more sugars, sweeteners, flavoring agents, flavor enhancers, starches, gluten, spices/seasonings, emulsifiers, preservatives and mixtures thereof.

In one aspect of the invention, the meat substitute product comprises sodium chloride. The amount of sodium chloride is present in a range of from 0.1 to 3.0 wt%, 0.2 to 2.5 wt%, 0.5 to 2.0 wt%, or 1.0 to 1.5 wt% on the total weight of meat substitute product.

In another aspect of the invention, the meat substitute product is further comprising one or more texturing ingredients in a total amount of from 0.5 to 10.0 wt%, from 1.0 to 8.0 wt% or from 2.0 to 6.0 wt%. The texturing ingredients may comprise gums, such as, but not limited to, carrageenan, konjac gum, lotus bean gum, guar gum or xanthan gum, vegetable fibers, starches from various botanical sources, such as potato starch or maize starch, being in form of native starch, physically or chemically modified starch, or a mixture of two or more thereof.

The addition of texturing ingredients, such as starches, may help to increase yield of the meat substitute product by enhancing the water and oil absorption, increasing moisture retention and adding firmness of bite.

Texturizing ingredients may increase process tolerance, improve oil binding, increase up-front viscosity during processing, add firmness, cohesiveness and/or elasticity to the cooked product, enhance succulence and/or reduce purge during shelf life.

In one more aspect of the invention, the meat substitute product also comprises one or more monosaccharides and/or disaccharides. Preferred monosaccharides and/or disaccharides are sucrose, fructose, glucose, and mixtures of two or more thereof. The amount of monosaccharides and/or disaccharides is in a range of from 0.1 to 3.0 wt%, from 0.2 to 2.5 wt%, or from 0.3 to 2.0 wt% on the total weight of the meat substitute product.

In yet one more aspect of the invention, the meat substitute product comprises one or more ingredients selected from sodium phosphates, sodium ascorbates, citrates, sodium carbonates, sweeteners, flavoring agents, flavor enhancers, spices/seasonings, emulsifiers and preservatives. The amount of each ingredient, if present, is preferably in a range of from 0.01 to 2.0 wt%, from 0.02 to 1.0 wt% on the total weight of the meat substitute product.

In one aspect of the invention, the meat substitute product is comprising a casing. The casing may be comprising one or more layers. The casing will determine the shape of the meat substitute product after heat treatment, such as an approximately cylindrical shape. In one aspect of the invention, the casing has a thickness of less than 0.5 mm, less than 0.2 mm, less than 0.1 mm

The casing can be of natural origin or artificial. Natural casings are obtained from animal intestines derived from slaughtering. Manufactured artificial casings are made of cellulose, collagen, alginates or synthetic materials such as polyamide (PA), polyethylene (PE), polypropylene (PP), polyvinylidenchloride (PVDC) and polyester (PET). In one aspect of the invention, the casing of the meat substitute product is comprising animal intestine, cellulose, collagen, polyamide (PA), polyethylene (PE), polypropylene (PP), polyvinylidenchloride (PVDC) and/or polyester (PET).

Casings may be characterized by their permeability to water and gases. Depending on the type of food product, a casing with a good permeability may be selected allowing the filling to dry and/or take up smoke. Alternatively, a casing with a minimal permeability may be selected to prevent water loss, to obtain a long shelf-life and/or to preserve a good taste and flavor
The type of casing may also be selected based on its mechanical strength. Synthetic casings are mechanically strong, relatively heat resistant, impermeable to smoke, gases and water vapor. Synthetic casings are particularly useful for sausages of larger caliber, sausages where water vapor losses during heat treatment are not wanted, sausages to be cooked at relatively high temperatures and/or sausages with long shelf life and good preservation of taste and flavor. The skilled person in the art will be able to select a suitable casing for the meat substitute product of interest.

In one aspect of the invention, the meat substitute product is comprising:
- a randomly interesterified triglyceride in a range of from 1.0 to 10.0 wt%, from 1.5 to 8.0%, from 2.0 to 6.0 wt%, or from 3.0 to 5.0 wt%, and
- a liquid oil in a range of from 4 to 30 wt%, from 5 to 25 wt%, from 7 to 20 wt%, from 10 to 15 wt%,
- at least one protein ingredient in a range of from 2 to 25 wt%, from 5 to 20 wt%, or from 10 to 15 wt%,
- water in a range of from 40 to 80 wt%, 50 to 75 wt%, or from 60 to 70wt%,
- one or more texturing ingredients in a total amount of from 0.5 to 10.0 wt%, from 1.0 to 8.0 wt% or from 2.0 to 6.0 wt%, and
wherein the randomly interesterified triglyceride has:
- a content of C12 of less than 5.0 wt%, less than 3.0 wt%, or even less than 1.0 wt%,
- a content of C16+C18 in a range of from 35 to 65 wt%, from 38 to 55 wt%, from 40 to 50 wt%, or from 42 to 45 wt%,
- a ratio of C18 over C16 in a range of from 1.0 to 10.0, from 1.1 to 8.0, or from 1.2 to 6.5,
- an SUS/SSU ratio in a range of from 0.5 to 1.0, from 0.6 to 0.9, or from 0.7 to 0.8, and wherein the meat substitute product is an emulsified meat substitute product, preferably an emulsified vegetarian protein product.

In one preferred aspect of the invention, the meat substitute product is comprising:
- a casing, and
- a randomly interesterified triglyceride in a range of from 1.0 to 10.0 wt%, from 1.5 to 8.0%, from 2.0 to 6.0 wt%, or from 3.0 to 5.0 wt%, and
- a liquid oil in a range of from 4 to 30 wt%, from 5 to 25 wt%, from 7 to 20 wt%, from 10 to 15 wt%,
- at least one protein ingredient in a range of from 2 to 25 wt%, from 5 to 20 wt%, or from 10 to 15 wt%,
- water in a range of from 40 to 80 wt%, 50 to 75 wt%, or from 60 to 70wt%,
- one or more texturing ingredients in a total amount of from 0.5 to 10.0 wt%, from 1.0 to 8.0 wt% or from 2.0 to 6.0 wt%,
wherein the randomly interesterified triglyceride has:
- a content of C12 of less than 5.0 wt%, less than 3.0 wt%, or even less than 1.0 wt%,
- a content of C16+C18 in a range of from 35 to 65 wt%, from 38 to 55 wt%, from 40 to 50 wt%, or from 42 to 45 wt%,
- a ratio of C18 over C16 is in a range of from 1.0 to 10.0, from 1.1 to 8.0, or from 1.2 to 6.5, and
- an SUS/SSU ratio in a range of from 0.5 to 1.0, from 0.6 to 0.9, or from 0.7 to 0.8, and

wherein the fatty acids from the randomly interesterified triglyceride are not sourced from palm and/or hydrogenated triglycerides, and
wherein the meat substitute product is an emulsified meat substitute product, preferably an emulsified vegetarian protein product, and
wherein the meat substitute product is a cold cut.

The meat substitute product according of the present invention that is comprising the randomly interesterified triglyceride, has an improved mouthfeel and texture compared to a meat substitute product that is comprising liquid oil and/or coconut oil.
The meat substitute product of the present invention has a juicy, fatty mouthfeel, nice bite and good firmness of the texture. The meat substitute product has a good stability. No appearance of oil droplets on the surface (sweating) is observed after a stability test of the product during 1h at room temperature.

For the production of the meat substitute product according to the present invention, processes for the production of meat-based sausages that are generally well known in the art, may be used. The meat substitute product may be prepared in a process where crushed ice/water, comminuted (ground) fat, comminuted (ground) protein ingredients and optionally other ingredients such as sodium chloride, spices/seasonings coloring agents are chopped, processed and subsequently filled under vacuum into casings. The filled casings are heat treated and subsequently cooled down. The meat substitute product of the present invention is obtained.

The use of the randomly interesterified triglyceride for improving the texture and/or organoleptic properties of a meat substitute product is described and not part of the claimed invention.
The use, wherein the randomly interesterified triglyceride has a content of lauric acid (C12) of less than 5.0 wt%, less than 3.0 wt%, or even less than 1.0 wt%, a content of palmitic acid (C16) and stearic acid (C18) is in a range of from 35 to 65 wt%, from 38 to 55 wt%, from 40 to 50 wt%, or from 42 to 45 wt%, and a ratio of C18 over C16 is in a range of from 1.0 to 10.0, from 1.1 to 8.0, or from 1.2 to 6.5.

The use, wherein the randomly interesterified triglyceride has a content of oleic acid (C18.1) and linoleic acid (C18.2) in a range of from 35 to 60 wt%, from 40 to 58 wt%, or from 45 to 55 wt%.

The use, wherein the randomly interesterified triglyceride is characterized by a ratio of SUS over SSU (SUS/SSU) in a range of from 0.5 to 1.0, from 0.6 to 0.9, or from 0.7 to 0.8.

The use, wherein the randomly interesterified triglyceride has a melting point in a range of from 35 to 65°C, from 38 to 55°C, or from 40 to 50°C.

The use, wherein the randomly interesterified triglyceride has:
- a content of C16+C18 in a range of from 35 to 65 wt%, from 38 to 50 wt%, of from 40 to 45 wt%, and
- a ratio of C18 to C16 of from 1.0 to 1.5, from 1.1 to 1.4, and
- a content of C12 of less than 5.0 wt%, less than 3.0 wt%, or even less than 1.0 wt%,
- a content of C18.1+C18.2 in a range of from 35 to 60 wt%, from 40 to 58 wt%, or from 45 to 55 wt%, and
- an SUS/SSU ratio in a range of from 0.5 to 1.0, from 0.6 to 0.9, or from 0.7 to 0.8, and
wherein the fatty acids from the randomly interesterified triglyceride are not sourced from palm and/or hydrogenated triglycerides.

### EXAMPLES

### 1. The randomly interesterified triglyceride

Randomly interesterified tryglicerides N° 1 to 4 are obtained by chemically interesterifying the fat blends 1 to 4 as described in table 1. The chemical interesterification is a process that is generally well known by the person skilled in the art.

The fatty acid composition of the randomly interesterified triglycerides are shown in table 1.

**Table 1 - Composition of the fat blends & fatty acid composition of the randomly interesterified triglycerides**

| | **N° 1** | **N° 2** | **N° 3** | **N° 4** |
|---|---|---|---|---|
| **Composition of the fat blends** | | | | |
| Cocoa butter | 70 | | 57 | |
| Shea Butter | | 80 | | |
| Shea olein | | | 27 | 60 |
| Fully hydrogenated sunflower oil | | | | 20 |
| Rapeseed oil | 30 | | 16 | 20 |
| Sunflower oil | | 20 | | |

| **Fatty acid composition of the randomly interesterified triglycerides** | | | | |
|---|---|---|---|---|
| C12 | 0.0% | 0.0% | 0.1% | 0.2% |
| C16 | 18.8% | 3.8% | 16.5% | 5.8% |
| C18 | 25.1% | 37.7% | 28.2% | 36.1% |
| C16+C18 | 43.9% | 41.6% | 44.7% | 41.9% |
| C18/C16 | 1.3 | 9.8 | 1.7 | 6.2 |
| C18.1 | 42.7% | 46.3% | 44.1% | 44.8% |
| C18.2 | 7.9% | 7.9% | 7.3% | 9.2% |
| C18.1+C18.2 | 50.6% | 54.1% | 51.4% | 53.9% |

| **Positional triglyceride composition of the randomly interesterified triglycerides** | | | | |
|---|---|---|---|---|
| DAG | 1.9 | 2.1 | 2.1 | 2.1 |
| SSS | 10.4 | 6.6 | 10.3 | 7.4 |
| SUS | 11.6 | 9.6 | 11.5 | 10.1 |
| SSU | 23.1 | 19.3 | 23.0 | 20.2 |
| SUU | 25.5 | 27.9 | 25.7 | 27.5 |
| USU | 12.7 | 14.0 | 12.9 | 13.8 |
| UUU | 14.1 | 20.3 | 14.4 | 18.8 |
| SUS/SSU | 0.5 | 0.5 | 0.5 | 0.5 |

### 2. Recipe of the food composition

Food products were prepared. An impermeable, artificial casing was used. The recipe of the meat alternative products is shown in table 2.

**Table 2 - Recipe of the meat substitute product composition**

| | Recipe A (comparative example) | Recipe B (comparative example) | Recipe C |
|---|---|---|---|
| Cold water (@4°C) | 66.825% | 66.825% | 66.825% |
| Sunflower oil | 10.00% | 7.00% | 7.00% |
| Coconut oil | | 3.00% | |
| Randomly interesterified triglyceride N° 1 | | | 3.00% |
| Pea protein isolate | 15.00% | 15.00% | 15.00% |
| Dextrose | 0.15% | 0.15% | 0.15% |
| Kitchen salt | 0.90% | 0.90% | 0.90% |
| Flanogen REM 2760 (Cargill) * | 4.50% | 4.50% | 4.50% |
| Food colorings | 0.015% | 0.015% | 0.015% |
| Food flavorings | 2.31% | 2.31% | 2.31% |
| Lactic acid | 0.30% | 0.30% | 0.30% |

| | | | |
|---|---|---|---|
| *Flanogen REM 2760 (Cargill) is a multiple ingredient system consisting of hydrocolloids like carrageenan, konjac and xanthan gum with fiber and functional, label friendly starch. | | | |

### 3. Preparation of the meat substitute product

The following steps were taken to prepare the food composition according to the present invention:
- The fat (randomly interesterified triglyceride N°1 or the coconut oil) in powdered form was prepared:
   ∘ Cubes (about 1 to 2 cm³) of the fat were kept for at least 12h at -18°C.
   ∘ The cubes of fat in frozen condition were crushed into a Thermomix for 10 seconds at maximum speed.
   ∘ Resulting fat in powdered form was kept in frozen condition.
- Water at 2-4°C was added to the bowl of a vacuum cutter.
- The ingredients of the recipe were added to the water in the vacuum cutter while mixing. Ingredients were added in the following order: pea protein isolate - kitchen salt - lactic acid - blend of powders - liquid oil (at 2-4°C) - powdered fat. No vacuum was applied.
- Vacuum (85%) was applied for 90 seconds while mixing at 6000rpm.
- The final emulsion was obtained.
- Before stuffing, the impermeable, artificial casing was immersed in water at 20°C for at least 30 min.
- The final emulsion was stuffed in the casing by means of a vacuum filler.
- The thus obtained raw logs were cooked at 90° by using 100% steam until a core temperature of 80°C degrees was reached.

### 4. Evaluation of the meat substitute product

- Descriptive sensorial evaluation:
   ∘ Recipe A: was soft and juicy, did not give a fatty sensation and not masking off-flavours (pea aftertaste)
   ∘ Recipe B: had a harder and more brittle bite, was more chewy, less juicy and off-flavours were better masked than recipes A.
   ∘ Recipe C: was generally evaluated as the best recipe, had best texture: harder bite but not brittle, firm texture, most juicy, and was best masking off-flavours
- Stability test of slices of recipe B and C during 1h at 20°C:
   ∘ Oil droplets (sweating) were appearing on surface of slices of food product according to recipe B
   ∘ No oil droplets were appearing on the surface of slices of food product according to recipe C

## Claims

1. A meat substitute product comprising a randomly interesterified triglyceride, and at least one protein ingredient, wherein the randomly interesterified triglyceride has a content of lauric acid (C12) of less than 5.0 wt%, a content of palmitic acid (C16) and stearic acid (C18) in a range of from 35 to 65%, and a ratio of C18 over C16 in a range of from 1.0 to 10.0, and wherein the randomly interesterified triglyceride is present in an amount of from 1.0 to 10.0 wt% on the total weight of the meat substitute product, and wherein the meat substitute product has a total triglyceride content in a range of from 5 to 40 wt.% on the total weight of the meat substitute product; and wherein the randomly interesterified triglyceride has a content of oleic acid (C18.1) and linoleic acid (C18.2) in a range of from 35 to 65%.and wherein the randomly interesterified triglyceride has an SUS/SSU ratio in a range of from 0.5 to 1.0.

2. The meat substitute product according to claim 1, wherein the meat substitute product is further comprising a liquid oil in an amount if from 4 to 30 wt% on the total weight of the meat substitute product.

3. The meat substitute product according to any one of the preceding claims, wherein the protein ingredient is sourced from plants, fungi, algae, insects, cultured meat or a mixture of two or more thereof.

4. The meat substitute product according to any one of the preceding claims, wherein the meat substitute product is comprising a casing.

5. The meat substitute product according to any one of the preceding claims, wherein the meat substitute product is an emulsified meat substitute product.

6. The meat substitute product according to any one of the preceding claims, wherein the meat substitute product is a cold cut.

7. The meat substitute product according to any one of the preceding claims, wherein the meat substitute product is a sausage.

8. The meat substitute product according to any one of claims 1 to 7, wherein the meat substitute product is a pet food.

## Patentansprüche

1. Fleischersatzprodukt, umfassend ein zufällig umgeestertes Triglycerid und mindestens eine Proteinzutat, wobei das zufällig umgeesterte Triglycerid einen Gehalt an Laurinsäure (C12) von weniger als 5,0 Gew.-%, einen Gehalt an Palmitinsäure (C16) und Stearinsäure (C18) in einem Bereich von 35 bis 65 % und ein Verhältnis von C18 zu C16 in einem Bereich von 1,0 bis 10,0 aufweist, und wobei das zufällig umgeesterte Triglycerid in einer Menge von 1,0 bis 10,0 Gew.-%, bezogen auf das Gesamtgewicht des Fleischersatzprodukts, vorhanden ist, und wobei das Fleischersatzprodukt einen Gesamttriglyceridgehalt in einem Bereich von 5 bis 40 Gew.-%, bezogen auf das Gesamtgewicht des Fleischersatzprodukts, aufweist; und wobei das zufällig umgeesterte Triglycerid einen Gehalt an Ölsäure (C18.1) und Linolsäure (C18.2) in einem Bereich von 35 bis 65 % aufweist und wobei das zufällig umgeesterte Triglycerid ein SUS/SSU-Verhältnis in einem Bereich von 0,5 bis 1,0 aufweist.

2. Fleischersatzprodukt nach Anspruch 1, das Fleischersatzprodukt ferner umfassend ein flüssiges Öl in einer Menge von 4 bis 30 Gew.-%, bezogen auf das Gesamtgewicht des Fleischersatzprodukts.

3. Fleischersatzprodukt nach einem der vorstehenden Ansprüche, wobei die Proteinzutat aus Pflanzen, Pilzen, Algen, Insekten, kultiviertem Fleisch oder einer Mischung aus zwei oder mehreren davon stammt.

4. Fleischersatzprodukt nach einem der vorstehenden Ansprüche, das Fleischersatzprodukt umfassend eine Hülle.

5. Fleischersatzprodukt nach einem der vorstehenden Ansprüche, wobei das Fleischersatzprodukt ein emulgiertes Fleischersatzprodukt ist.

6. Fleischersatzprodukt nach einem der vorstehenden Ansprüche, wobei das Fleischersatzprodukt ein Aufschnitt ist.

7. Fleischersatzprodukt nach einem der vorstehenden Ansprüche, wobei das Fleischersatzprodukt eine Wurst ist.

8. Fleischersatzprodukt nach einem der Ansprüche 1 bis 7, wobei das Fleischersatzprodukt ein Tierfutter ist.

## Revendications

1. Produit de substitution de viande comprenant un triglycéride interestérifié de manière aléatoire et au moins un ingrédient protéique, dans lequel le triglycéride interestérifié de manière aléatoire a une teneur en acide laurique (C12) inférieure à 5,0 % en poids, une teneur en acide palmitique (C16) et en acide stéarique (C18) comprise entre 35 et 65 %, et un rapport de C18 sur C16 compris entre 1,0 à 10,0, et dans lequel le triglycéride interestérifié de manière aléatoire est présent en une quantité de 1,0 à 10,0 % en poids du poids total du produit de substitution de viande, et dans lequel le produit de substitution de viande a une teneur totale en triglycérides comprise entre 5 et 40 % en poids du poids total du produit de substitution de viande ; et dans lequel le triglycéride interestérifié de manière aléatoire a une teneur en acide (C18.1) et en acide linoléique (C18.2) comprise entre 35 et 65 %, et dans lequel le triglycéride interestérifié de manière aléatoire a un rapport SUS/SSU compris entre 0,5 et 1,0.

2. Produit de substitution de viande selon la revendication 1, dans lequel le produit de substitution de viande comprend en outre une huile liquide dans une proportion allant de 4 à 30 % en poids du poids total du produit de substitution de viande.

3. Produit de substitution de viande selon l'une quelconque des revendications précédentes, dans lequel l'ingrédient protéique provient de plantes, de champignons, d'algues, d'insectes, de viande cultivée ou d'un mélange de deux ou plusieurs d'entre eux.

4. Produit de substitution de viande selon l'une quelconque des revendications précédentes, dans lequel le produit de substitution de viande comprend un boyau.

5. Produit de substitution de viande selon l'une quelconque des revendications précédentes, dans lequel le produit de substitution de viande est un produit de substitution de viande émulsifié.

6. Produit de substitution de viande selon l'une quelconque des revendications précédentes, dans lequel le produit de substitution de viande est de la charcuterie.

7. Produit de substitution de viande selon l'une quelconque des revendications précédentes, dans lequel le produit de substitution de viande est une saucisse.

8. Produit de substitution de viande selon l'une quelconque des revendications 1 à 7, dans lequel le produit de substitution de viande est un aliment pour animaux de compagnie.
